(19) Europäisches Patentamt / European Patent Office / Office européen des brevets

(11) **EP 4 435 908 A1**

(12) **EUROPEAN PATENT APPLICATION**
published in accordance with Art. 153(4) EPC

(43) Date of publication:
**25.09.2024 Bulletin 2024/39**

(21) Application number: **22901624.1**

(22) Date of filing: **16.11.2022**

(51) International Patent Classification (IPC):
**H01M 8/1051** *(2016.01)*    **H01M 8/1058** *(2016.01)*
**H01M 8/1004** *(2016.01)*

(52) Cooperative Patent Classification (CPC):
**H01M 8/1004; H01M 8/1051; H01M 8/1058;**
Y02E 60/50

(86) International application number:
**PCT/KR2022/018037**

(87) International publication number:
**WO 2023/101266 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.11.2021   KR 20210169151
15.11.2022   KR 20220152897

(71) Applicant: **Kolon Industries, Inc.**
**Seoul 07793 (KR)**

(72) Inventors:
- **PARK, Jung Hwa**
  **Seoul 07793 (KR)**

- **LEE, Dong Hoon**
  **Seoul 07793 (KR)**
- **SONG, Kum Suck**
  **Seoul 07793 (KR)**
- **YUN, Sung Hyun**
  **Seoul 07793 (KR)**
- **YUM, Seung Jib**
  **Seoul 07793 (KR)**
- **OH, Chang Hoon**
  **Seoul 07793 (KR)**
- **LEE, Hye Song**
  **Seoul 07793 (KR)**
- **LEE, Eun Su**
  **Seoul 07793 (KR)**

(74) Representative: **Ter Meer Steinmeister & Partner Patentanwälte mbB**
**Nymphenburger Straße 4**
**80335 München (DE)**

(54) **POLYMER ELECTROLYTE MEMBRANE, FABRICATION METHOD THEREFOR, AND ELECTROCHEMICAL DEVICE COMPRISING SAME**

(57)   The present disclosure relates to a polymer electrolyte membrane including an ion conductor wherein the polymer electrolyte membrane contains an antioxidant-releasing material.

## FIG.1

**Description**

**[TECHNICAL FIELD]**

The present disclosure relates to a polymer electrolyte membrane that allows the antioxidant effect to be maintained for a long period of time and is capable of preventing performance deterioration of the fuel cell by including an antioxidant-releasing material that releases antioxidants and thus releasing antioxidants through a hydrolysis reaction caused by moisture generated during operation of a fuel cell, and an electrochemical device including the same.

**[BACKGROUND ART]**

Fuel cells are batteries that directly convert chemical energy generated by oxidation of fuel into electrical energy, and are in the limelight as a next-generation energy source due to their high energy efficiency and eco-friendly characteristics with low pollutant emissions.

The fuel cells generally have a structure in which an anode and a cathode are formed on both sides of the electrolyte membrane, respectively, in a state in which an electrolyte membrane is placed therebetween, and such a structure is called a membrane-electrode assembly (MEA).

The fuel cells may be classified into alkaline electrolyte fuel cells, polymer electrolyte membrane fuel cells (PEMFC), etc., depending on the type of an electrolyte membrane, and the polymer electrolyte membrane fuel cells among them are in the limelight as portable, automotive, and home power supply devices due to their advantages such as a low operating temperature of less than 100°C, fast start-up and response characteristics, excellent durability, etc.

Typical examples of such polymer electrolyte membrane fuel cells may include a proton exchange membrane fuel cell (PEMFC), which uses hydrogen gas as fuel, and the like.

To summarize the reactions that occur in a polymer electrolyte membrane fuel cell, first, when fuel such as hydrogen gas is supplied to the anode, hydrogen ions ($H^+$) and electrons ($e^-$) are generated at the anode by an oxidation reaction of hydrogen. The generated hydrogen ions ($H^+$) are transferred to the cathode through the polymer electrolyte membrane, and the generated electrons ($e^-$) are transferred to the cathode through an external circuit. Oxygen is supplied from the cathode, and oxygen is bonded to hydrogen ions ($H^+$) and electrons ($e^-$) to produce water by a reduction reaction of oxygen.

Since the polymer electrolyte membrane is a passageway through which hydrogen ions ($H^+$) generated at the anode are transferred to the cathode, the conductivity of hydrogen ions ($H^+$) must be basically excellent. In addition, the polymer electrolyte membrane must have excellent separation ability to separate hydrogen gas supplied to the anode and oxygen supplied to the cathode. In addition, it must have excellent mechanical strength, dimensional stability, chemical resistance, etc., and requires characteristics such as it must have small ohmic loss at high current densities.

Requirements for the polymer electrolyte membrane required for operation of the polymer electrolyte membrane fuel cell include high hydrogen ion conductivity, chemical stability, low fuel permeability, high mechanical strength, low moisture content, excellent dimensional stability, etc. A conventional polymer electrolyte membrane tends to have difficulty expressing normal high performance in certain temperature and relative humidity environments, especially high temperature/low humidification conditions. Due to this, a polymer electrolyte membrane fuel cell to which the conventional polymer electrolyte membranes is applied is limited in its range of use.

The lifespan of a polymer electrolyte membrane is shortened due to electrochemical degradation and physical degradation during operation. The main cause of electrochemical degradation is that hydrogen and oxygen cross over the polymer electrolyte membrane and generate radicals on the platinum electrode catalyst.

The radicals formed on the platinum electrode catalyst react with the ion conductor of the polymer electrolyte membrane, thereby degrading the polymer electrolyte membrane through reactions such as cutting the ion conductor chain.

Meanwhile, since oxygen is supplied from the cathode during operation of the fuel cell, and water is generated through the reduction reaction of oxygen by bonding oxygen to hydrogen ions ($H^+$) and electrons ($e^-$), there are problems in that materials such as various additives added to the polymer electrolyte membrane are easily lost by water or are moved by water to decrease their dispersibility.

Accordingly, a problem may arise in which additives such as antioxidants do not function properly or do not sufficiently exert an antioxidation effect relative to the amount added.

Therefore, there is a need to develop technology that can prevent electrochemical degradation of polymer electrolyte membranes and maintain the anti-degradation effect for a long period of time at the same time.

[Related Art Document]

# EP 4 435 908 A1

(0001) Korean Patent No. 0972525 (2010.07.28)
(0002) European Patent No. 2002451 (2014.03.26)
(0003) Korean Patent Publication No. 2008-0045421 (2008.05.23)

## [DETAILED DESCRIPTION OF INVENTION]

### [TECHNICAL PROBLEMS]

The present disclosure has the effect of improving chemical durability by preventing degradation of the polymer electrolyte membrane.

The present disclosure has the effect of maintaining the antioxidation effect for a long period of time by gradually releasing antioxidants through reaction with by-products generated during operation of the fuel cell.

The present disclosure also have effects of reducing the loss amount of additives due to moisture generated during fuel cell operation, thereby reducing the manufacturing cost of the polymer electrolyte membrane, and suppressing the increase in resistance due to the addition of additives, thereby preventing deterioration of fuel cell performance.

### [TECHNICAL SOLUTION]

According to one aspect of the present disclosure, there may be provided a polymer electrolyte membrane containing an ion conductor, wherein the polymer electrolyte membrane contains an antioxidant-releasing material.

The antioxidant may be one or more selected from the group consisting of salicylic acid, curcumin, folic acid, coumaric acid, caffeic acid, and ferulic acid.

The antioxidant-releasing material may be one that releases antioxidants through hydrolysis.

The antioxidant may be salicylic acid.

The antioxidant-releasing material may include one selected from the group consisting of an ester group, an acid anhydride group, an amide group, a thioester group, and an ether group.

The antioxidant-releasing material may be salsalate.

The ion conductor may be one or more selected from the group consisting of a hydrocarbon-based ion conductor, a fluorine-based ion conductor, and an anionic ion conductor.

The polymer electrolyte membrane may include: a porous support; and an ion conductor impregnated into the pores of the porous support.

According to another aspect of the present disclosure, there may be provided a membrane-electrode assembly including the above-described polymer electrolyte membrane, the membrane-electrode assembly including: an anode electrode and a cathode electrode located opposite to each other; and a polymer electrolyte membrane located between the anode electrode and the cathode electrode.

According to another aspect of the present disclosure, an electrochemical device including the above-described membrane-electrode assembly may be provided.

### [EFFECT OF INVENTION]

The polymer electrolyte membrane according to the present disclosure has the effect of maintaining an antioxidant effect for a long period of time.

The polymer electrolyte membrane according to the present disclosure can reduce the manufacturing cost of the fuel cell by preventing loss of additives to enable the content of additives compared to the anti-oxidation effect to be reduced while having an excellent anti-oxidation effect compared to the amount of additives added.

### [BRIEF DESCRIPTION OF THE DRAWING]

FIG. 1 is a vertical cross-sectional view of a polymer electrolyte membrane according to the present disclosure.
FIG. 2 is a vertical cross-sectional view of a membrane-electrode assembly including a polymer electrolyte membrane according to the present disclosure.
FIG. 3 is a schematic diagram showing the overall configuration of a fuel cell according to one embodiment of the present disclosure.

**[BEST MODE FOR CARRYING OUT THE INVENTION]**

Hereinafter, each configuration of the present disclosure will be described in more detail so that those skilled in the art to which the present disclosure pertains can easily implement the present disclosure, but this is only one example, and the scope of rights of the present disclosure is not limited by the following contents.

"Preferred" or "preferably" used in the present disclosure refers to one embodiment of the present disclosure that has certain advantages under certain conditions. However, other embodiments may also be preferred under the same or different conditions. Additionally, one or more preferred embodiments do not mean that other embodiments are not useful, and do not exclude other embodiments that are within the scope of the present disclosure.

The term "comprising" used in this specification is used to list materials, compositions, devices, and methods useful in the present disclosure and is not limited to the listed examples thereof.

The "electrochemical device" in this specification may include all of power generation devices, for example, a fuel cell and an energy storage device, for example redox flow batteries. Preferably, the electrochemical device in this specification may be a fuel cell.

The polymer electrolyte membrane according to the present disclosure is a polymer electrolyte membrane containing an ion conductor, and the polymer electrolyte membrane contains an antioxidant-releasing material.

The antioxidant-releasing material is a material that does not function as an antioxidant in itself, but is capable of releasing a material that functions as an antioxidant by being hydrolyzed through an additional reaction, for example, an oxidation reaction.

In particular, the antioxidant-releasing material is characterized in that it reacts with moisture or hydrogen ions formed during fuel cell operation to release a material that can function as an antioxidant.

The antioxidant-releasing material does not function as an antioxidant in itself in any form, but is not limited as long as it can release antioxidants through an additional reaction.

For example, it may be a material containing an antioxidant protecting group, a material that releases antioxidants through a hydrolysis reaction, or a core-shell structure form containing an antioxidant in a core and being provided with a shell that protects the core, and may also be in a form in which antioxidants are supported within the porous structure.

Preferably, it may be a material containing an antioxidant protecting group or a material that releases antioxidants through a hydrolysis reaction.

The antioxidant can be used without particular restrictions as long as it can be used as an antioxidant in the fuel cell technology field. For example, it may be a material such as metal particles, metal oxide, or organic acid.

More preferably, the antioxidant may be one or more selected from the group consisting of salicylic acid, curcumin, folic acid, coumaric acid, caffeic acid, ferulic acid, etc., and most preferably, salicylic acid. The antioxidant-releasing material is a material composed of salicylic acid, curcumin, folic acid, coumaric acid, caffeic acid, or ferulic acid through condensation reaction, polymerization, dimerization, or trimerization, and may be a material capable of releasing the antioxidant during operation of the fuel cell. For example, the antioxidant-releasing material may be salicylic acid dimer, salicylic acid trimer, curcumin dimer, folic acid dimer, coumarin dimer, coumarin polymer, caffeic acid dimer, caffeic acid trimer, ferulic acid dimer, or the like, and particularly, it may be a material that contains a hydrolyzable group in its molecular structure and thus can be decomposed into salicylic acid, curcumin, folic acid, coumaric acid, caffeic acid, or ferulic acid by hydrolysis during the operation of an electrochemical device.

When the antioxidant is salicylic acid, the antioxidant-releasing material may be composed of a material capable of releasing salicylic acid by hydrolysis.

Salicylic acid is a phenolic compound in which a carboxyl group is substituted, and the name salicylic acid is a common name for 2-hydroxybenzoic acid. As a material with strong acidity, it contains both a carboxyl group and a hydroxy group so that a condensation reaction is possible at the relevant functional group.

In the present disclosure, in particular, a condensation reaction occurs at one or more of the two functional groups of antioxidants such as salicylic acid and curcumin to form an antioxidant-releasing material, which is formed so that it may be hydrolyzed through an oxidation reaction during the operation of an electrochemical device within a polymer electrolyte membrane to release organic antioxidants such as salicylic acid, curcumin, or the like that is an antioxidant.

Accordingly, the antioxidant-releasing material includes a bond formed by the reaction of carboxyl group and/or hydroxy group, which are condensation reactive functional groups of salicylic acid.

Specifically, the antioxidant-releasing material may include one selected from the group consisting of an ester group, an acid anhydride group, an amide group, a thioester group, and an ether group.

That is, the antioxidant-releasing material may be composed of a condensation reactant.

Preferably, it may contain an ester group or an acid anhydride group, and most preferably, it may contain an ester group.

The functional group may react with water and be hydrolyzed into a compound containing a carboxyl group and/or a hydroxy group to release an antioxidant such as salicylic acid.

The antioxidant-releasing material that releases salicylic acid as an antioxidant may be, for example, salsalate.

Salsalate is a common name for 2-[(2-hydroxyphenyl)carbonyloxy]benzoic acid, and it may be formed through an esterification condensation reaction of two molecules of salicylic acid.

As such, when the antioxidant-releasing material is salsalate in the present disclosure, since two molecules of salicylic acid are released through a hydrolysis reaction so that it can have an even more excellent antioxidation effect, the most preferred antioxidant-releasing material in the present disclosure may be salsalate.

Meanwhile, since the antioxidant-releasing material may be formed in various forms as described above, it is not limited to materials obtained by reacting a small number of reactants, such as two molecules such as salsalate.

For example, a condensation reactive functional group may be grafted onto the surface of a large structure such as a porous support, and thus condensation reaction with an antioxidant may be performed to form an antioxidant-releasing material.

The present disclosure may be configured in various forms without being limited to the shape, size, or the like of the material as long as it is a material that can gradually release antioxidants due to moisture generated during fuel cell operation.

According to one embodiment of the present disclosure, the antioxidant-releasing material may be used in an amount of 0.05 to 15% by weight, for example, 0.1 to 10% by weight, 0.2 to 5% by weight, or 0.5 to 4% by weight based on the total weight of the polymer in the polymer electrolyte membrane. The effect of antioxidant release can be effectively obtained while maintaining the inherent physical properties of the polymer electrolyte membrane by using the antioxidant-releasing material in the above amount.

As the polymer electrolyte membrane of the present disclosure, any forms are all right such as a single membrane formed by placing an ion conductor having ion conductivity in a mold and casting the ion conductor having ion conductivity placed in the mold, and a reinforced composite membrane containing a composite material prepared by immersing a porous support in a dispersion in which the ion conductor is dispersed.

The reinforced composite membrane has the effect of improving dimensional stability and physical and mechanical properties by including a porous support and an ion conductor filled in the pores of the porous support, and has the advantage of maintaining excellent performance and lifespan of the fuel cell itself since it prevents battery performance from deteriorating even if the resistance of the polymer electrolyte membrane itself increases somewhat.

The porous support constituting the reinforced composite membrane is made of polymer material in the form and the like generally including a perfluorinated polymer sheet containing a plurality of pores due to the microstructure of polymer fibrils or a nanoweb in which nanofibers are integrated in the form of a non-woven fabric containing a plurality of pores.

As described above in the present disclosure, the antioxidant is grafted onto the surface of the porous support in a form capable of releasing it, and then the porous support can also be composed of antioxidant-releasing materials through reactions such as condensation reaction with the antioxidant, polymerization, dimerization, and trimerization.

The porous support is made of an aggregate of three-dimensionally irregular and discontinuously connected nanofibers, and accordingly includes a plurality of uniformly distributed pores. The porous support composed of such a plurality of uniformly distributed pores has excellent porosity and properties (dimensional stability, etc.) that can complement the physical properties of the ion conductor.

The pore diameter, which is the diameter of the pores formed in the porous support, may be formed within the range of 0.05 to 30 $\mu$m (micrometers), and if the pore diameter is formed to less than 0.05 $\mu$m, the ionic conductivity of the polymer electrolyte may decrease, and the pore diameter exceeds 30 $\mu$m, the mechanical strength of the polymer electrolyte may decrease.

In addition, porosity, which indicates the degree of pore formation of the porous support, may be formed within the range of 50 to 98%.

If the porosity of the porous support is less than 50%, the ionic conductivity of the polymer electrolyte may decrease, and if the porosity exceeds 98%, the mechanical strength and shape stability of the polymer electrolyte may decrease.

The porosity (%) can be calculated by the ratio of the air volume to the total volume of the porous support as shown in Equation 1 below.

[Equation 1]

$$\text{Porosity (\%)} = (\text{air volume/total volume}) \times 100$$

At this time, the total volume of the porous support is calculated by manufacturing a sample of a rectangular porous support and measuring the width, length, and thickness thereof, and the air volume of the porous support can be obtained by subtracting the polymer volume inversely calculated from the density from the total volume of the porous support after measuring the mass of the porous support sample.

The nanofibers constituting the porous support may have an average diameter range of 0.005 to 5 μm (micrometers). If the average diameter of the nanofibers is less than 0.005 μm, the mechanical strength of the porous support may decrease, and if the average diameter of the nanofibers exceeds 5 μm, it may not be easy to control the porosity of the porous support.

The porous support may be any one selected from the group consisting of nylon, polyimide, polybenzoxazole, polyethylene terephthalate, polyethylene, polypropylene, polytetrafluoroethylene, poly(arylene ether sulfone), polyether ether ketone, copolymers thereof, and combinations thereof, but the present disclosure is not limited thereto.

The porous support may be formed to a thickness of 5 to 30 μm (micrometers). If the thickness of the porous support is less than 5 μm, the mechanical strength and shape stability of the polymer electrolyte may be reduced, and if the thickness of the porous support exceeds 30 μm, the ohmic loss of the polymer electrolyte may increase.

The ion conductor may be cation conductors each independently having a cation exchange group such as a proton, or anion conductors having an anion exchange group such as a hydroxy ion, carbonate, or bicarbonate.

The cation exchange group may be any one selected from the group consisting of a sulfonic acid group, a carboxyl group, a boronic acid group, a phosphoric acid group, an imide group, a sulfonimide group, a sulfonamide group, a sulfonic acid fluoride group, and combinations thereof, and may be generally a sulfonic acid group or a carboxyl group.

The cation conductors contain the cation exchange group and may include: a fluorine-based polymer containing fluorine in the main chain; hydrocarbon-based polymers such as benzimidazole, polyamide, polyamideimide, polyimide, polyacetal, polyethylene, polypropylene, acrylic resin, polyester, polysulfone, polyether, polyetherimide, polyester, polyethersulfone, polyetherimide, polycarbonate, polystyrene, polyphenylene sulfide, polyether ether ketone, polyetherketone, polyarylethersulfone, polyphosphazene, or polyphenylquinoxaline; partially fluorinated polymers such as polystyrene-graft-ethylenetetrafluoroethylene copolymers or polystyrene-graft-polytetrafluoroethylene copolymers; sulfone imide; etc.

More specifically, when the cation conductors are hydrogen ion cation conductors, the polymers may contain a cation exchange group selected from the group consisting of a sulfonic acid group, a carboxylic acid group, a phosphoric acid group, a phosphonic acid group, and derivatives thereof in the side chains thereof, and specific examples of the polymers may include: a fluorine-based polymer including poly(perfluorosulfonic acid), poly(perfluorocarboxylic acid), a copolymer of tetrafluoroethylene and fluorovinyl ether containing a sulfonic acid group, defluorinated polyetherketone sulfide, or mixtures thereof; and a hydrocarbon-based polymer including sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or mixtures thereof, but are not limited thereto.

The anion conductors are a polymer capable of transferring anions such as hydroxy ions, carbonate, or bicarbonate, the anion conductors are commercially available in the form of hydroxide or halide (generally chloride), and the anion conductors may be used for industrial water purification, metal separation, catalytic processes, or the like.

As the anion conductors, a polymer doped with a metal hydroxide may be generally used, and specifically poly(ethersulfone), polystyrene, a vinyl-based polymer, poly(vinyl chloride), and poly(vinylidene fluoride), poly(tetrafluoroethylene), poly(benzimidazole), polyethylene glycol), or the like, which is doped with a metal hydroxide, may be used.

Among the above ion conductors, the fluorine-based polymer can be used. The fluorine-based polymer may be, for example, a perfluorosulfonic acid (PFSA)-based polymer or a perfluorocarboxylic acid (PFCA)-based polymer, but is not limited thereto. Nafion (Dupont) can be used as the perfluorosulfonic acid-based polymer, and Flemion (Asahi Glass) can be used as the perfluorocarboxylic acid-based polymer.

The ion conductor may have a weight average molecular weight of 240 g/mol to 200,000 g/mol, specifically 240 g/mol to 100,000 g/mol.

Hereinafter, the present disclosure will be described in more detail based on the drawings.

However, this is only an example to explain the present disclosure, and the scope of rights of the present disclosure is not limited by the following description.

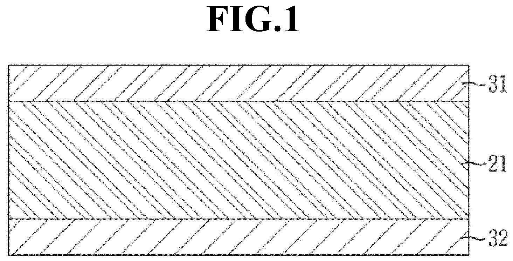

FIG. 1 is a vertical cross-sectional view of a polymer electrolyte membrane according to the present disclosure.

Referring to FIG. 1, the polymer electrolyte membrane according to one embodiment of the present disclosure shows a vertical cross-section of a porous support 21 including a plurality of pores and a reinforced composite membrane in which the pores of the porous support are impregnated with an ion conductor (not shown), and may have a structure that further includes ion conductor layers 31 and 32 on one surface and the other surface of the porous support impregnated with the ion conductor, respectively.

As described above, the ion conductor layers 31 and 32 located on one surface and the other surface of the porous support may also form the ion conductor layer located on the surface of the porous support thin so that it is adjacent to the electrode where radicals are formed in order to configure the porous support to function better as a radical scavenger.

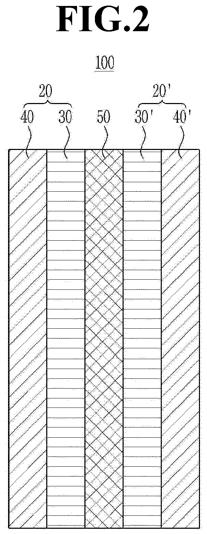

FIG. 2 is a cross-sectional view schematically showing a membrane-electrode assembly including a polymer electrolyte membrane according to the present disclosure. When it is described with reference to FIG. 2, the membrane-electrode assembly 100 includes the polymer electrolyte membrane 50 and electrodes 20 and 20' disposed on both surfaces of the polymer electrolyte membrane 50, respectively. The electrodes 20 and 20' include electrode substrates 40 and 40' and catalyst layers 30 and 30' formed on the surfaces of the electrode substrates 40 and 40', and may further include a microporous layer (not shown) containing conductive fine particles such as carbon powder, carbon black, and the like in order to facilitate diffusion of materials from the electrode substrates 40 and 40' between the electrode substrates 40 and 40' and the catalyst layers 30 and 30'.

In the membrane-electrode assembly 100, an electrode 20, which is disposed on one surface of the polymer electrolyte membrane 50 to cause an oxidation reaction that generates hydrogen ions and electrons from fuel transferred to the catalyst layer 30 through the electrode substrate 40, is called an anode electrode, and an electrode 20', which is disposed on the other surface of the polymer electrolyte membrane 50 to cause a reduction reaction that generates water from the hydrogen ions supplied through the polymer electrolyte membrane 50 and the oxidizing agent transferred to the catalyst layer 30' through the electrode substrate 40', is called a cathode electrode.

A porous conductive substrate may be used as the electrode substrates 40 and 40' so that supply of hydrogen or oxygen is smoothly achieved. Typical examples thereof may include carbon paper, carbon cloth, carbon felt, or metal cloth (refers to a porous film made of metal cloth in a fiber state or one in which a metal film is formed on the surface of a cloth formed of polymer fibers), but are not limited thereto. In addition, it is preferable to use the electrode substrates 40 and 40' that are water repellent treated with a fluorine-based resin to prevent reactant diffusion efficiency from being reduced by water generated during operation of the fuel cell. The fluorine-based resin may include polytetrafluoroethylene, polyvinylidene fluoride, polyhexafluoropropylene, polyperfluoroalkyl vinyl ether, polyperfluorosulfonylfluoride alkoxyvinyl ether, fluorinated ethylene propylene, polychlorotrifluoroethylene, or copolymers thereof.

The fuel cell according to one embodiment of the present disclosure includes the membrane-electrode assembly and may be, for example, a fuel cell using hydrogen gas as fuel.

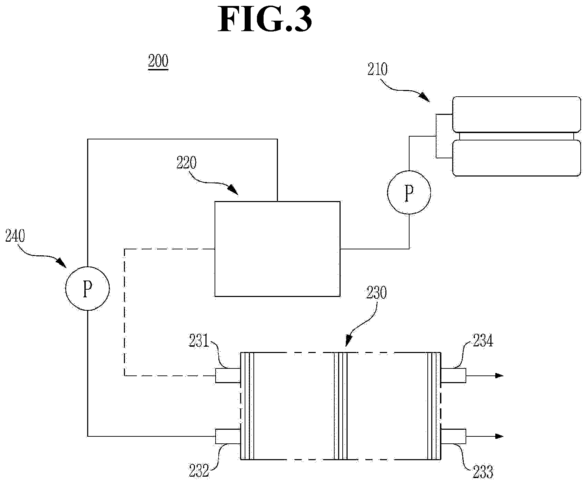

FIG. 3 is a schematic diagram showing the overall configuration of the fuel cell.

Referring to FIG. 3, the fuel cell 200 includes a fuel supply unit 210 that supplies a mixed fuel in which fuel and water are mixed, a reforming unit 220 that reforms the mixed fuel to generate a reformed gas containing hydrogen gas, a stack 230 in which the reformed gas containing hydrogen gas supplied from the reforming unit 220 causes an electrochemical reaction with an oxidizing agent to generate electrical energy, and an oxidizing agent supply unit 240 supplying the oxidizing agent to the reforming unit 220 and the stack 230.

The stack 230 is provided with a plurality of unit cells that generate electrical energy by inducing an oxidation/reduction reaction between the reformed gas containing hydrogen gas supplied from the reforming unit 220 and the oxidizing agent supplied from the oxidizing agent supply unit 240.

Each of the unit cells refers to a unit cell that generates electricity, and includes a membrane-electrode assembly that oxidizes/reduces oxygen in the hydrogen gas-containing reformed gas and the oxidizing agent, and separators (or called bipolar plates, hereinafter referred to as 'separators') for supplying the hydrogen gas-containing reformed gas and the oxidizing agent to the membrane-electrode assembly. The separators are disposed on both sides thereof in a state in which the membrane-electrode assembly is placed at the center. At this time, the separators located on the outermost sides of the stack may be particularly called end plates.

Among the separators, the end plate is provided with a pipe-shaped first supply pipe 231 for injecting reformed gas containing hydrogen gas supplied from the reforming unit 220, and a pipe-shaped second supply pipe 232 for injecting oxygen gas, and the other end plate is provided with a first discharge pipe 233 for discharging to the outside the reformed gas containing the hydrogen gas that is ultimately unreacted and remaining in the plurality of unit cells, and a second discharge pipe 234 for discharging to the outside the oxidizing agent that is ultimately unreacted and remaining in the above-described unit cells.

**[MODE FOR CARRYING OUT THE INVENTION]**

Hereinafter, the present disclosure will be described in more detail based on Examples of the present disclosure, but this is only an exemplary description for understanding the present disclosure, and the scope of rights of the present disclosure is not limited or restricted to the following Examples.

**[Preparation Example]**

**<Example** 1> - **Nation single membrane**

Salsalate (an amount corresponding to 2% by weight of the total weight of the polymer in the dispersion) was added to the Nafion D2021 dispersion (polymer content in the dispersion was 20% by weight) and formed into a film on a glass base to prepare a single membrane with a thickness of 20 $\mu$m.

**<Example 2> - Hydrocarbon-based ion conductor single membrane**

After dissolving 15% by weight of sulfonated poly(ethter sulfone) (SPES) in DMAc, salsalate (an amount corresponding to 2% by weight of the total weight of the polymer in the dispersion) was added thereto and formed into a film on a glass base to prepare a single membrane with a thickness of 20 $\mu$m.

**<Example 3> - Nation reinforced composite membrane**

It was prepared in the same manner as in Example 1 except that the PTFE support was impregnated with the dispersion to prepare it in the form of a reinforced composite membrane in Example 1 above.

**<Example 4> - Hydrocarbon-based ion conductor reinforced composite membrane**

It was prepared in the same manner as in Example 1 except that the PPS support was impregnated with the dispersion to prepare it in the form of a reinforced composite membrane in Example 2 above.

**<Comparative Example 1>** - **Nation single membrane, compared to Example 1**

It was prepared in the same manner as in Example 1 except that the same amount of salicylic acid was added to the dispersion instead of salsalate in Example 1 above.

**<Comparative Example 2> - Hydrocarbon-based ion conductor single membrane, compared to Example 2**

It was prepared in the same manner as in Example 2 except that the same amount of salicylic acid was added to the dispersion instead of salsalate in Example 2 above.

**<Comparative Example 3> - Nafion reinforced composite membrane, compared to Example 3**

It was prepared in the same manner as in Example 3 except that the same amount of salicylic acid was added to the dispersion instead of salsalate in Example 3 above.

**<Comparative Example 4>** - **Hydrocarbon-based ion conductor reinforced composite membrane, compared to Example 4**

It was prepared in the same manner as in Example 4 except that the same amount of salicylic acid was added to the dispersion instead of salsalate in Example 4 above.

**<Comparative Example 5>** - **Nation single membrane, compared to Example 1**

It was prepared in the same manner except for additives such as salsalate in Example 1 above.

**<Comparative Example 6> - Hydrocarbon-based ion conductor single membrane, compared to Example 2**

It was prepared in the same manner as in Example 2 except for additives such as salsalate in Example 2 above.

**<Comparative Example 7> - Nafion reinforced composite membrane, compared to Example 3**

It was prepared in the same manner as in Example 3 except for additives such as salsalate in Example 3 above.

**<Comparative Example 8>** - **Hydrocarbon-based ion conductor reinforced composite membrane, compared to Example 4**

It was prepared in the same manner as in Example 4 except for additives such as salsalate in Example 4 above.

**[Experimental Method]**

1) Battery performance evaluation:

A cathode and an anode were each formed with a Pt/C catalyst according to a decal transfer method, and were bonded to a polymer electrolyte membrane to prepare and evaluate a membrane-electrode assembly. The output performance was evaluated through I-V measurements of the membrane-electrode assembly. Specifically, to confirm the output performance under actual fuel cell operating conditions, the membrane-electrode assembly was fastened to a fuel cell unit cell evaluation device and the temperature was maintained at 65°C. Hydrogen (100 %RH) and air (100 %RH) were each supplied to the anode and cathode in amounts appropriate for Stoichiometry 1.2/2.0. The current densities at 0.6 V were measured, and the higher the result values are, the more excellent the output performances are shown to be.

2) Chemical durability evaluation:

The evaluation cells are placed in the OCV state and the cell voltages are measured at regular time intervals to calculate the reduction rates compared to the initial OCV. Measurements were made using Scribner 850 fuel cell test system as measurement equipment (evaluated under conditions of 90°C, 30 %RH, and 50 kPa). Specifically, OCV(V)/initial OCV(V) was measured with the passage of time (hr) every 24 hours. When this ratio was 0.8 or less, the evaluation was terminated, and the measurement time was used as the standard for durability.
Membrane-electrode assemblies were manufactured using the polymer electrolyte membranes of the Examples and Comparative Examples above, and battery performance evaluation, battery lifespan evaluation, and chemical durability evaluation were performed on them and are shown in Table 1 below.

[Table 1]

|  | Battery performance evaluation (mA/cm$^2$) | Chemical durability (hr) |
|---|---|---|
| Example 1 | 1013 | 552 |
| Example 2 | 1028 | 528 |
| Example 3 | 1003 | 576 |
| Example 4 | 1006 | 552 |
| Comparative Example 1 | 1014 | 504 |
| Comparative Example 2 | 1027 | 480 |
| Comparative Example 3 | 1000 | 504 |
| Comparative Example 4 | 1009 | 504 |
| Comparative Example 5 | 1007 | 312 |
| Comparative Example 6 | 1013 | 288 |
| Comparative Example 7 | 997 | 336 |
| Comparative Example 8 | 1001 | 312 |

Referring to Table 1, although the membrane-electrode assemblies have similar battery performances, they show differences in chemical durabilities. This is because, while salicylic acid serves as an antioxidant and is consumed, salsalate serves as an antioxidant and then decomposes into salicylic acid to show a function as an additional antioxidant.

**Claims**

1. A polymer electrolyte membrane containing an ion conductor, wherein the polymer electrolyte membrane contains an antioxidant-releasing material.

2. The polymer electrolyte membrane of claim 1, wherein the antioxidant is one or more selected from the group consisting of salicylic acid, curcumin, folic acid, coumaric acid, caffeic acid, and ferulic acid.

3. The polymer electrolyte membrane of claim 1, wherein the antioxidant-releasing material is one that releases antioxidants through hydrolysis.

4. The polymer electrolyte membrane of claim 2, wherein the antioxidant is salicylic acid.

5. The polymer electrolyte membrane of claim 1, wherein the antioxidant-releasing material includes one selected from the group consisting of an ester group, an acid anhydride group, an amide group, a thioester group, and an ether group.

6. The polymer electrolyte membrane of claim 4, wherein the antioxidant-releasing material is salsalate.

7. The polymer electrolyte membrane of claim 1, wherein the ion conductor is one or more selected from the group consisting of a hydrocarbon-based ion conductor, a fluorine-based ion conductor, and an anionic ion conductor.

8. The polymer electrolyte membrane of claim 1, wherein the polymer electrolyte membrane comprises:

   a porous support; and
   an ion conductor impregnated into the pores of the porous support.

9. A membrane-electrode assembly comprising the polymer electrolyte membrane according to claim 1, the membrane-electrode assembly comprising

   an anode electrode and a cathode electrode located opposite to each other; and
   a polymer electrolyte membrane located between the anode electrode and the cathode electrode.

10. An electrochemical device comprising the membrane-electrode assembly according to claim 9.

# FIG.1

# FIG.2

# FIG.3

**EP 4 435 908 A1**

<table>
<tr><td colspan="2">INTERNATIONAL SEARCH REPORT</td><td>International application No.<br><br>**PCT/KR2022/018037**</td></tr>
</table>

| A. | CLASSIFICATION OF SUBJECT MATTER |
|---|---|
| | **H01M 8/1051**(2016.01)i; **H01M 8/1058**(2016.01)i; **H01M 8/1004**(2016.01)i |

According to International Patent Classification (IPC) or to both national classification and IPC

| B. | FIELDS SEARCHED |
|---|---|

Minimum documentation searched (classification system followed by classification symbols)

H01M 8/1051(2016.01); H01M 10/0562(2010.01); H01M 10/0565(2010.01); H01M 8/02(2006.01); H01M 8/10(2006.01); H01M 8/1018(2016.01); H01M 8/1048(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이온 전도체(ion conductive material), 고분자 전해질막(polymer electrolyte membrane), 산화방지제(antioxidant), 살살레이트(salsalate), 가수분해(hydrolysis), 방출(release)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2013-0110569 A (KOLON INDUSTRIES, INC.) 10 October 2013 (2013-10-10)<br>See claim 1; and paragraph [0005]. | 1-10 |
| A | CN 112803066 A (QINGDAO UNIVERSITY) 14 May 2021 (2021-05-14)<br>See claims 1-10. | 1-10 |
| A | JP 2010-135130 A (KURARAY CO., LTD.) 17 June 2010 (2010-06-17)<br>See claims 1-11. | 1-10 |
| A | KR 10-2021-0084283 A (KOLON INDUSTRIES, INC.) 07 July 2021 (2021-07-07)<br>See entire document. | 1-10 |
| A | JP 2009-094010 A (SAMSUNG SDI CO., LTD.) 30 April 2009 (2009-04-30)<br>See entire document. | 1-10 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 March 2023** | **02 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/018037**

| Patent document cited in search report | | | Publication date (day/month/year) | Patent family member(s) | | | Publication date (day/month/year) |
|---|---|---|---|---|---|---|---|
| KR | 10-2013-0110569 | A | 10 October 2013 | None | | | |
| CN | 112803066 | A | 14 May 2021 | None | | | |
| JP | 2010-135130 | A | 17 June 2010 | None | | | |
| KR | 10-2021-0084283 | A | 07 July 2021 | CN | 115104207 | A | 23 September 2022 |
| | | | | EP | 4084168 | A1 | 02 November 2022 |
| | | | | JP | 2022-552560 | A | 16 December 2022 |
| | | | | US | 2023-0006231 | A1 | 05 January 2023 |
| | | | | WO | 2021-133045 | A1 | 01 July 2021 |
| JP | 2009-094010 | A | 30 April 2009 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 0972525
- EP 2002451 A
- KR 20080045421